# EUROPÄISCHE PATENTSCHRIFT

(11) **EP 2 444 232 B1**
(45) Veröffentlichungstag und Bekanntmachung des Hinweises auf die Patenterteilung: **11.08.2021**
(21) Anmeldenummer: 11186075.5
(22) Anmeldetag: 21.10.2011
(51) Int. Cl.: B29C 49/42, B65G 47/86, B67C 7/00, B29C 49/46

(54) **Transferstern im Reinraum**
Transfer starwheel in a clean room
Etoile de transfert dans la salle blanche

(30) Priorität: 21.10.2010 DE 102010049026
(43) Veröffentlichungstag der Anmeldung: 25.04.2012
(73) Patentinhaber: Krones AG, 93073 Neutraubling (DE)
(72) Erfinder: Voth, Klaus, 93073 Neutraubling (DE); Martini, Oliver, 93073 Neutraubling (CH); Lappe, Ulrich, 93073 Neutraubling (DE); Söllner, Jürgen, 93073 Neutraubling (DE); Winzinger, Frank, 93073 Neutraubling (DE); Hausladen, Josef, 93073 Neutraubling (DE)
(74) Vertreter: Bittner, Bernhard

(56) Entgegenhaltungen:
- EP-A1- 1 905 728
- EP-A2- 2 221 272
- DE-A1- 19 928 325
- DE-A1-102008 018 516
- DE-A1-102008 034 389
- DE-A1-102008 038 141
- DE-A1-102008 056 241
- DE-A1-102009 010 010
- None

## Beschreibung

Die vorliegende Erfindung bezieht sich auf eine Transporteinrichtung zum Transportieren von Kunststoffbehältnissen, welche eine Vielzahl von Transportelementen umfasst, welche jeweils an einem Träger angeordnet sind und welche dazu geeignet sind, die Kunststoffbehältnisse zu transportieren, wobei die Vorrichtung einen Reinraum mit mindestens zwei gegenüber einander relativbeweglichen Begrenzungen aufweist, innerhalb dessen die Transportelemente zumindest abschnittsweise angeordnet sind. Weiterhin betrifft die Erfindung eine Anlage zum Umformen von Kunststoffbehältnissen, welche in Bezug auf eine Transportrichtung der Kunststoffbehältnisse stromauf- und/oder stromabwärts von einer Umformungseinrichtung mindestens eine der oben erwähnten Transporteinrichtungen aufweist. Außerdem betrifft die Erfindung ein Verfahren zum Transportieren von Kunststoffbehältnissen mittels einer solchen Vorrichtung.

Für viele Getränke ist es erforderlich, sie unter aseptischen Bedingungen abzufüllen. Dazu ist es nach dem Stand der Technik möglich, dass vor dem Abfüllen ein Sterilisationsprozess der bereits fertig gestellten Flaschen in einem dafür vorgesehen Reinraum durchgeführt wird. Vorteil dieser Methode ist, dass alle zuvor stattfindenden Prozesse wie die Preform-Herstellung, deren Transport, deren Erwärmung und deren Blasen zur Flasche in einer unsterilen Umgebung stattfinden können. In diesem Falle ist es erforderlich, eine relativ große Fläche zu sterilisieren, nämlich diejenige der fertig erzeugten Kunststoffflasche.

Das Sterilisieren der Behältnisse vor der Befüllung mit sensiblem Füllgut kann beispielsweise derart erfolgen, dass das Füllgut erhitzt und heiß abgefüllt wird und durch das heiße Füllgut die Flascheninnenseite entkeimt wird. Oft ist dies jedoch nicht ausreichend oder nicht möglich, da das Füllgut nicht auf die erforderlichen Temperaturen erhitzt werden kann. Daher sind Verfahren entwickelt worden, um das leere Behältnis vor dem Füllvorgang separat zu entkeimen und dieses in einem nachgeschalteten Prozessschritt unter aseptischen Bedingungen mit an anderer Stelle sterilisiertem Füllgut zu befüllen. Die Sterilität des leeren Behältnisses wird dabei durch chemische Desinfektionsmittel wie beispielsweise Peroxide oder Persäuren oder andere erreicht. Dazu werden die Behältnisse einem sogenannten Isolator zugeführt, in dem sie mit dem Desinfektionsmittel beaufschlagt werden. Das Desinfektionsmittel wirkt eine bestimmte Zeit ein und wird anschließend mit verhältnismäßig hohem Aufwand wieder entfernt. Es besteht dabei dennoch die Gefahr, dass Restmengen in dem Behältnis verbleiben. Die Übergabe der sterilisierten Behälter erfolgt direkt an eine aseptisch gekapselte Abfüllvorrichtung. Um hierbei die Sterilität der Gebinde zu erhalten, ist eine relativ aufwändige Apparatur notwendig.

Es ist daher aus vielerlei Gründen wünschenswert, nicht die Kunststoffflasche selbst zu sterilisieren, sondern bereits den Kunststoffvorformling. Er weist eine erheblich geringere zu sterilisierende Oberfläche auf, wodurch es bei dessen Sterilisation ermöglicht wird, im Vergleich zur Sterilisation der fertigen Flasche Sterilisationsmittel einzusparen. Allerdings ist es bei diesem Verfahren notwendig, die Behältnisse nach deren Sterilisation, über den gesamten weiteren Transportweg, über den Blas- und den Abfüllvorgang hinaus, unter sterilen Bedingungen zu transportieren. Mindestens bis der befüllte Behälter verschlossen ist, müssen die aseptischen Bedingungen aufrecht erhalten werden.

In EP 0 794 903 B1 ist ein System und ein Verfahren zum sterilen Verpacken von Getränken beschrieben. Dabei wird ein Getränkebehälter aus einem Vorformling durch Blasformgebung gebildet, anschließend wird der Behälter mit einem sterilen Getränk befüllt und schließlich der gefüllte Behälter mit einer sterilisierten Verschlusskappe verschlossen. Es ist dabei vorgesehen, dass unterschiedliche Sterilisationsgrade in verschiedenen Teilen der Kammer aufrechterhalten werden. Der Grad der Sterilisation in dem betreffenden Segment korreliert mit dem für den speziellen Verfahrensschritt erforderlichen Sterilisationsgrad.

Hierbei wird der gesamte Herstellungsprozess der Flasche und auch der Füll- und Verschließprozess durchgängig unter sterilen Bedingungen durchgeführt. Dabei ist auch eine vollständige Umformungseinheit der Behältnisse in einem Reinraum angeordnet. Dadurch ist zwar ein hoher Sterilisierungs- und Reinheitsgrad der auf diese Weise befüllten Behältnisse gewährleistet, jedoch der Aufwand für die Sterilisierung außerordentlich hoch. Es müssen sehr große Räume steril gehalten werden, in denen auch eine Vielzahl von Maschinenteilen, insbesondere im Bereich der Blasvorrichtung, angeordnet ist. Bei Wartungsarbeiten oder Defekten muss dementsprechend der Reinraum geöffnet und wieder erneut sterilisiert werden, wodurch hohe Kosten und sehr lange Standzeiten hervorgerufen werden.

In der Druckschrift WO 2010 020 529 A2 ist eine Vorrichtung zum Umformen von Kunststoffvorformlingen zu Kunststoffbehältnissen mit einer Vielzahl von Blasstationen offenbart, wobei jede dieser Blasstationen eine Blasform aufweist, innerhalb derer ein Kunststoffvorformling zu einem Kunststoffbehältnis umformbar ist. Die Vorrichtung weist einen Reinraum auf, innerhalb dessen die Blasstationen angeordnet sind. Das Reinraumvolumen ist stark reduziert, da große Bereiche der Vorrichtung außerhalb des Reinraums angeordnet sind.

Der Reinraum dieser Vorrichtung ist als ein Reinraumkanal vorgesehen, durch welchen hindurch die Kunststoffvorformlinge bzw. Behältnisse in den Blasstationen geführt werden, wobei ein großer Teil der Vorrichtung außerhalb des Reinraums verbleibt. Damit werden Teile der Umformungseinheit wie einer Blasmaschine, z. B. das gesamte Blasrad bzw. die Blaskavitäten durch eine Reinraumbegrenzung oder einen abgeschlossenen Isolator von dem Rest der Blasmaschine abgetrennt.

DE102008038141 A1 offenbart den Gegenstand der Oberbegriffe der Ansprüche 1 und 9.

Der vorliegenden Erfindung liegt daher die Aufgabe zugrunde, den Aufwand zum Sterilhalten von Behältnissen während des Transports in einer Abfüllanlage bzw. einer Umformungsanlage zu reduzieren. Ebenso ist es eine Aufgabe der Erfindung das Volumen des Reinraums möglichst gering zu halten. Insbesondere ist es Aufgabe der Erfindung Transport- und Übergabesterne bereitzustellen, welche ein möglichst geringes Reinraumvolumen aufweisen, jedoch trotzdem eine ausreichende Sterilität der transportierten und übergebenen Behältnisse gewährleisten.

Dies wird erfindungsgemäß durch eine Vorrichtung nach Anspruch 1 und ein Verfahren nach Anspruch 9 erreicht. Vorteilhafte Ausführungsformen und Weiterbildungen sind Gegenstand der Unteransprüche.

Eine erfindungsgemäße Transporteinrichtung ist im Anspruch 1 definiert.

Dabei bilden die gegenüber einander relativbeweglichen Begrenzungen einen Hohlraum aus, welcher als Reinraum genutzt wird. Die Kunststoffbehältnisse werden im Inneren dieses Kanals transportiert und dort durch die Transportelemente auf der Transportbahn geführt. Die Begriffe "Behältnis" und "Kunststoffbehältnis" werden im Folgenden zur Vereinfachung synonym verwendet. Dabei schließen diese Begriffe auch Vorprodukte derartiger Behältnisse ein. Insbesondere beziehen sich diese Begriffe auch auf Vorformlinge (z.B. Kunststoffvorformlinge für z.B. Flaschen).

Die gegenüber einander relativbeweglichen Begrenzungen des Reinraums sind derart ausgelegt, dass sie Kontaminationen des Reinraums verhindern. Der Bereich, in dem die Begrenzungen sich aneinander annähern, ist mittels einer geeigneten Dichtung versehen, die ebenfalls dazu geeignet ist, Kontaminationen des Reinraums zu verhindern. Eine Möglichkeit der Ausführung einer solchen Dichtung besteht in Form von Sperrflüssigkeitsdichtungen, z.B. als ein sogenanntes "Wasserschloss". Als Sperrmedium (Sperrflüssigkeit) wird bevorzugt ein desinfizierendes Medium z.B. peroxidhaltige (z.B. wässrige) Lösungen verwendet.

Bei den Behältnissen handelt es sich insbesondere um Kunststoffbehältnisse wie insbesondere Kunststoffvorformlinge oder aus diesen Kunststoffvorformlingen hergestellte Kunststoffflaschen. Die Erfindung kann jedoch auch für andere Behältnisse wie beispielsweise Glasflaschen Anwendung finden.

Vorzugsweise ist wenigstens eine der Antriebseinrichtungen bzw. die Antriebsrichtung der Transporteinrichtung wenigstens teilweise außerhalb des Reinraums angeordnet. Es wird ferner vorgeschlagen, optional auch eine Antriebseinrichtung, welche ein Öffnen oder Schließen der Aufnahmeelemente für die Behältnisse bewirkt, außerhalb des Reinraums anzuordnen. Auf diese Weise kann das Volumen des Reinraums gegenüber dem Stand der Technik weiter reduziert werden. Es ist jedoch auch möglich, dass die Aufnahmeelemente passive Elemente sind, die keinen speziellen Antrieb benötigen.

Vorteilhaft ist wenigstens eine der außerhalb des Reinraums angeordneten Antriebseinrichtungen über eine Kopplungseinrichtung mit wenigstens einer seitlichen Begrenzung des Reinraums gekoppelt und diese Kopplungseinrichtung erstreckt sich durch eine Grenze des Reinraums hindurch. Vorteilhaft wird der Reinraum durch eine Wandung begrenzt, wobei es sich hierbei um eine flexible oder eine starre Wandung handeln kann. Diese Wandung stellt dabei vorteilhaft auch die Grenze des Reinraums zu dem nicht sterilen Außenbereich dar. Unter einer Kopplungseinrichtung wird hier insbesondere eine mechanisch wirkende Einrichtung verstanden, welche eine Bewegung der Antriebseinrichtung auf das Transportelement und/oder eine Reinraumbegrenzung überträgt.

Es ist vorgesehen, dass ein Träger eines Transportelements durch eine Aussparung in einer Begrenzung des Reinraums hindurchtritt. Innerhalb der Transporteinrichtung ist das Transportelement gegenüber der Aussparung in der Begrenzung mittels einer Dichtungseinrichtung abgedichtet, welche bevorzugt reinraumseitig angeordnet ist. Durch diese Anordnung ist es möglich, Bewegungen der Transporteinrichtung im Inneren des Reinraums bzw. gegenüber besagter Wandung von außen zu steuern. So könnte die Transporteinrichtung beispielsweise zusätzlich zu der Transportbewegung auch relativ zu dieser Wandung bewegt werden, um beispielsweise den Abstand zwischen einzelnen Behältnissen einstellen zu können. Weiterhin ist es möglich, Steuereinrichtungen (beispielsweise mechanische Steuereinrichtungen) zum Bewegen der Transporteinrichtung zusammen mit dem Träger durch die Aussparung in einer Begrenzung des Reinraums hindurchzuführen. Mittels dieser Steuereinrichtungen könnte von außerhalb des Reinraums beispielsweise das Aufnehmen oder Abgeben von Behältnissen gesteuert werden.

Es ist jedoch, nicht gemäß der Erfindung, auch möglich, dass die Transporteinrichtung nicht durch eine Aussparung in einer Begrenzung des Reinraums hindurchgeführt ist, sondern lediglich im Inneren an dieser angeordnet ist. In diesem Fall wäre es möglich, dass dennoch die Steuereinrichtungen zum Bewegen der Transporteinrichtung durch eine Aussparung in einer Begrenzung des Reinraums hindurchgeführt werden.

Für den Fall, dass die Relativbewegung der Transporteinrichtung gegenüber der Reinraumbegrenzung oder das Betätigen der Aufnahmeelemente ohne stoffliche Verbindung (z.B. magnetisch) von außen erfolgt, ist es möglich, nicht gemäß der Erfindung, dass auf die oben beschriebene Dichtung verzichtet werden kann. Dies kann ebenso der Fall sein, wenn es sich bei den Aufnahmeelementen um passive Aufnahmeelemente handelt. In diesem Fall könnte eine Materialverbindung zwischen der Wandung und dem Träger die Dichtungseinrichtung darstellen. Beispielsweise könnte eine Schweißnaht, ein Klebstoff, ein Kitt oder dergleichen als Dichtungseinrichtung dienen.

Bevorzugt befinden sich große Teile der Transporteinrichtung außerhalb des Reinraums. Insbesondere ist es vorteilhaft Antriebe und andere verhältnismäßig wartungsintensive mechanische Einrichtungen außerhalb des Reinraums anzuordnen. Somit wird zum einen das Reinraumvolumen verringert, zum anderen als zusätzlicher Vorteil auch die Zugänglichkeit zu diesen Teilen, beispielsweise im Fall einer Wartung, verbessert. Im Fall einer Wartung dieser Teile ist es somit nicht mehr notwendig, den Reinraum zu öffnen und dadurch die Gefahr von Kontaminationen drastisch zu erhöhen.

Zur Abgrenzung des Transportelements gegenüber der Aussparung in der Begrenzung und damit gegenüber der Öffnung zum unsterilen Bereich ist eine Vielzahl von Möglichkeiten denkbar. Vorteilhaft folgt wenigstens ein Abschnitt der Dichtung hinsichtlich seiner Bewegung dem Transportelement. Als besonders vorteilhaft haben sind reinraumseitig angeordnete Faltenbalge gezeigt. Daher ist in einer bevorzugten Ausführungsform der Transporteinrichtung der die Grenze des Reinraums passierende Träger mittels mindestens eines Faltenbalges gegenüber unsterilen Bereichen abgeschirmt. Ein solcher Faltenbalg gewährleistet nicht nur die Abschirmung des Reinrauminneren gegenüber unsterilen Bereichen, sondern ermöglicht zusätzlich einen großen Bewegungsraum des Transportelements. Dieses kann somit von außen gesteuert im Reinraum auch relativ zur Bewegung der Begrenzung bewegt werden, durch welche der Träger ins Reinrauminnere ragt. Somit sind auch Relativbewegungen der Behältnisse untereinander möglich, die es beispielsweise ermöglichen, Abstände zwischen den Behältnissen zu verändern.

Ebenso ermöglicht ein Faltenbalg als Dichtung auch das Einbringen von weiteren beweglichen Elementen wie beispielsweise der Steuermechanik zum Öffnen oder Schließen von Aufnahmeelementen.

In einer bevorzugten Ausführungsform der Transporteinrichtung weist diese Transporteinrichtung einen Hauptträger auf, an welchem die Träger angeordnet sind und um welchen bevorzugt der Reinraum weitgehend ringförmig angeordnet ist. Dieser Hauptträger ist bevorzugt mit dem Antrieb verbunden und bewegt sich derart, dass bei dessen Bewegung die Träger der Transporteinrichtung die Behältnisse entlang des Transportweges bewegen. Besonders bevorzugt sind dies Rotationsbewegungen des Hauptträgers, jedoch können auch andere Bewegungsformen möglich sein. Dies hängt von dem Verlauf des Transportweges und der Form des Reinraums ab.

In einer bevorzugten Ausführungsform der Transporteinrichtung ist daher der Träger gegenüber der Begrenzung relativbeweglich angeordnet.

In einer weiteren bevorzugten Ausführungsform der Transporteinrichtung weist das Transportelement mindestens ein aktives oder passives Aufnahmeelement auf, welches dazu geeignet ist, mindestens ein Kunststoffbehältnis aktiv oder passiv zumindest temporär zu fixieren. Bei diesen Aufnahmeelementen kann es sich beispielsweise um Klammern oder klammerartige Elemente handeln, welche aktiv angesteuert werden, um die Behältnisse aufzunehmen oder abzugeben. Bei der Ansteuerung und Betätigung dieser Aufnahmeelemente ist eine Vielzahl von Varianten möglich. So sind beispielsweise mechanisch ansteuerbare Aufnahmeelemente (z.B. Klammern) möglich. Ebenso ist es auch möglich, die Aufnahmeelemente berührungslos, z.B. magnetisch zu betätigen. Auch die elektrische Steuerung eines im Sterilraum befindlichen Servomotors zur Betätigung der Aufnahmeelemente ist möglich. Bei derartigen aktiv ansteuerbaren Aufnahmeelementen oder Formträgern sind insbesondere buchartig klappbare Elemente bevorzugt. Dabei kann ein Teil jedes Aufnahmeelementes auch feststehend ausgebildet sein und lediglich ein anderer Teil des Aufnahmeelementes gegenüber diesem relativbeweglich sein. Die Schwenkachse zwischen diesen Teilen kann sowohl weitgehend horizontal verlaufen und somit ein Teil des Aufnahmeelementes z.B. radial nach außen aufklappbar sein, als auch weitgehend senkrecht, was ein seitliches Schwenken mindestens eines Teils des Aufnahmeelementes ermöglicht.

Es kann sich jedoch auch um passive Aufnahmeelemente handeln. Beispielsweise sind passive Klammern, klammerartige Elemente oder Teller denkbar, von welchen die Behältnisse aufgenommen und entlang des Transportweges mitgeführt werden können. Bei derartigen passiven Aufnahmeelementen ist es auch möglich, dass beispielsweise mittels (z.B. mechanischer) Federn oder durch Magnete die Haltekraft verstärkt wird.

Derartige aktive oder passive Aufnahmeelemente können zusätzlich auch auf einer Blasform des Blasrads angebracht sein, um eine punktgenaue Übergabe der Kunststoffvorformlinge bzw. -Behältnisse von einer Transporteinrichtung auf das Blasrad bzw. vom Blasrad zu der stromabwärts angeordneten nächsten Transporteinrichtung zu garantieren.

In einer weiteren bevorzugten Ausführungsform der Transporteinrichtung ist das aktive oder passive Aufnahmeelement des Transportelements innerhalb einer Sterilisationseinrichtung eine Transportklammer oder ein Transportdorn. Diese Formen eigenen sich besonders gut für die Verwendung in Sterilisationseinrichtungen wie beispielsweise einem H₂O₂-Modul. Transportklammern können dabei sowohl aktiv als auch passiv ausgeführt sein.

Ein weiterer wesentlicher Aspekt der Erfindung ist eine Anlage zum Umformen von Kunststoffbehältnissen, welche in Bezug auf eine Transportrichtung der Kunststoffbehältnisse stromauf- und/oder stromabwärts von einer Umformungseinrichtung mindestens eine wie oben beschriebene Transporteinrichtung aufweist.

Ein weiterer wesentlicher Aspekt der Erfindung ist ein Verfahren zum Transportieren von Kunststoffbehältnissen mittels einer Vorrichtung mit einer Vielzahl von Transportelementen, welche an einem Träger angeordnet sind und welche die Kunststoffbehältnisse transportieren, wobei die Vorrichtung einen Reinraum mit mindestens zwei gegenüber einander relativbeweglichen Begrenzungen aufweist, innerhalb dessen die Transportelemente zumindest abschnittsweise angeordnet sind, wobei die Kunststoffbehältnisse mittels mindestens einem Transportelement transportiert werden, dessen Träger durch eine Aussparung in einer Begrenzung des Reinraums hindurchtritt und wobei der Träger und/oder das Transportelement gegenüber der Aussparung in der Begrenzung abgedichtet ist.

Durch dieses Verfahren können Behälter steril transportiert und gleichzeitig das Volumen des Sterilraums gering gehalten werden. Somit ist es möglich, Behältnisse steril einer Blasstation zuzuführen oder auch von dieser abzuführen und einer nachgeschalteten Füllanlage zuzuführen. Es ist weiterhin mit diesem Verfahren möglich, während des Transportes der Behältnisse den Abstand zwischen diesen während des Transportes zu variieren und so die Übergabe zwischen verschiedenen Behandlungseinrichtungen zu vereinfachen.

Bei einer besonders bevorzugten Variante des Verfahrens wird das Transportelement gegenüber der Aussparung mittels einer Dichtungseinrichtung, welche bevorzugt reinraumseitig angeordnet ist, abgedichtet.

Dieses Verfahren erlaubt auf einfache und effiziente Weise, dass die Behältnisse zwar relativbeweglich zueinander und zu den Begrenzungen des Reinraums sind, der Reinraum jedoch weiterhin steril bleibt.

Üblicherweise wird der Abstand zwischen den einzelnen Behältern einmal eingestellt und verbleibt während des weiteren Transports innerhalb des Reinraums weitgehend unverändert. In einer weiteren bevorzugten Variante des Verfahrens bleibt daher ein Abstand zwischen zwei transportierten Kunststoffvorformlingen oder Kunststoffbehältnissen während des Transportes innerhalb des Reinraums zumindest nahezu unverändert.

In einer weiteren bevorzugten Variante des Verfahrens wird ein Abstand zwischen zwei transportierten Kunststoffvorformlingen oder Kunststoffbehältnissen während des Transportes innerhalb des Reinraums zumindest abschnittsweise reduziert, um bei gleichbleibender Anzahl von einer Transporteinrichtung aufgenommener und abgegebener Kunststoffvorformlingen oder Kunststoffbehältnissen pro Zeiteinheit einen mehrmaligen Umlauf und somit längere Verweilzeiten der Kunststoffvorformlinge oder Kunststoffbehältnisse in dieser Transporteinrichtung zu ermöglichen. Durch diese Variante wird es ermöglicht, dass die Anzahl der Kunststoffvorformlinge oder Kunststoffbehältnisse innerhalb einer bestimmten Transporteinrichtung vervielfacht wird und somit bei gleichbleibender Anzahl der aufgenommenem und abgegebenen Kunststoffvorformlinge oder Kunststoffbehältnisse die Verweildauer ebenfalls um denselben Faktor vervielfacht wird.

Dies ist beispielsweise in einer Sterilisationseinrichtung vorteilhaft, da somit die Einwirkzeit des Sterilisationsmittels auf einfache Weise verlängert werden kann. Beispielsweise kann in einer solchen Sterilisationseinrichtung der Abstand zwischen Transporteinrichtungen halbiert oder auf ein Drittel reduziert werden (also die Teilung verdoppelt oder verdreifacht werden), um die Verweilzeit eines Kunststoffvorformlings oder Kunststoffbehältnisses innerhalb dieser Transporteinrichtung zu verdoppeln bzw. zu verdreifachen. Selbstverständlich sind auch andere beliebige (auch nicht ganzzahlige) Vielfache möglich.

Weiterhin wäre es möglich, eine die Aussparung in der radial innenliegenden Reinraumbegrenzung überdeckende Dichtung bzw. den Faltenbalg durch eine geeignete Klemmvorrichtung z. B. in Art einer Schlauchschelle zu fixieren. Im Fall eines Produktwechsels oder Änderungen der Halteelemente wäre es möglich, diese Seite lösbar auszuführen.

Dabei wäre es möglich, dass der besagte Faltenbalg in das Innere des Reinraums ragt, es wäre jedoch auch möglich, dass sich der Faltenbalg bezüglich des Reinraums nach Außen erstreckt.

Vorzugsweise weist der Reinraum wenigstens abschnittsweise ein ringförmiges Profil auf bzw. ein torusartiges Profil, wobei hier jedoch der Querschnitt dieses torusartigen Profils bevorzugt von einer Kreisform abweicht. Dies bedeutet, dass die Behältnisse durch die Transporteinrichtung auf einer bevorzugt im Wesentlichen kreisförmigen Bahn geführt werden.

Vorzugsweise ist der Reinraum von mehreren Wandungen begrenzt und wenigstens eine dieser Wandungen ist gegenüber einer weiteren Wandung bewegbar und insbesondere drehbar angeordnet.

Vorzugsweise ist eine radial außen angeordnete Wandung des Reinraum stationär angeordnet. Damit kann eine Wandung mit einem insbesondere zylinderförmigen Außenprofil vorgesehen sein, welche den Reinraum begrenzt. Radial innenliegend von dieser Wandung ist eine weitere Wandung vorgesehen, die den Reinraum innenseitig begrenzt und die drehbar angeordnet ist. Vorzugsweise wird diese innen angeordnete Wandung mit den einzelnen Aufnahmeelementen gedreht. Vorzugsweise liegen sich die erwähnte drehbare Wand und die stationär angeordnete Wand (insbesondere konzentrisch) gegenüber. Weiterhin wird der Reinraum von einer Wandung in Form eines Deckels begrenzt, wobei dieser Deckel vorzugsweise einteilig mit der stationären Wand ausgebildet ist.

Vorzugsweise ist zwischen wenigstens zwei Wandungen bzw. einer Wandung und einem Deckel eine Dichtungseinrichtung angeordnet. Diese Dichtungseinrichtung dichtet bevorzugt gegenüber einander bewegliche Teile gegeneinander ab. So wäre es beispielsweise möglich, zwischen einer Wandung und einem Deckel ein so genanntes Wasserschloss vorzusehen, bei dem ein hier bevorzugt ringförmiger Wasserkanal vorgesehen ist, in dem ein Abschnitt des gegenüber diesem Wasserkanal beweglichen Teils geführt wird. Dabei ist das Dichtungsmittel nicht auf Wasser oder wässrige Medien beschränkt, sondern kann jedes (insbesondere flüssige) geeignete Medium enthalten, welches die Sterilität des Reinrauminneren aufrecht erhält. Insbesondere sind wässrige Desinfektionslösungen wie Lösungen von H₂O₂ oder Persäuren geeignet. Somit kann effektiv verhindert werden, dass bei den vorgesehenen Relativbewegungen Kontaminationen die Grenze zwischen einem sterilen und einem nicht sterilen Raum überschreiten.

Weitere Vorteile und Ausführungsformen ergeben sich aus den beigefügten Zeichnungen:
Darin zeigen:
- Fig. 1: eine schematische Darstellung einer Transporteinrichtung zum Transportieren von Kunststoffbehältnissen mit einem Reinraum, innerhalb dessen die Transportelemente zumindest abschnittsweise angeordnet sind;
- Fig. 2: eine schematische Darstellung einer Transporteinrichtung zum Transportieren von Kunststoffbehältnissen ähnlich Fig. 1, jedoch mit mechanischen Elementen zum Bewegen des Transportelementes;
- Fig. 3: eine schematische Darstellung einer Anlage zum Behandeln von Kunststoffbehältnissen, welche eine Vielzahl von Transporteinrichtungen zum Transportieren von Kunststoffbehältnissen umfasst.

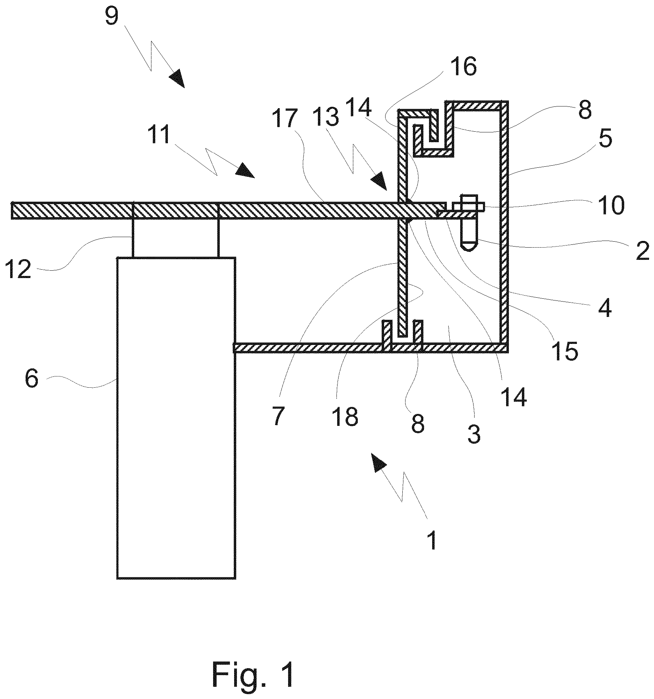

Figur 1 zeigt eine schematische Darstellung einer Transporteinrichtung 1 zum Transportieren von Kunststoffbehältnissen 2 mit einem Reinraum 3, innerhalb dessen die Transportelemente 4 zumindest abschnittsweise angeordnet sind. In dieser besonders einfachen Ausführungsform ist der äußere, feststehende Teil 5 der Reinraumbegrenzung mit dem ebenfalls feststehenden Gehäuse 6 des zentralen Antriebs verbunden. Gegenüber diesem ist ein innerer Teil 7 der Reinraumbegrenzung relativbeweglich.

Die Enden der gegenüber einander relativbeweglichen Reinraumbegrenzungen 5, 7 bilden ein "Wasserschloss" 8, also eine Dichtung 8 mit einem (nicht gezeigten) Sperrmedium. Somit ist das sterile Innere des Reinraums 3 vollständig gegenüber der unsterilen Umgebung 9 abgeschirmt. Im Inneren des Reinraums 3 ist ein Transportelement 4 gezeigt, welches ein Kunststoffbehältnis 2 oder ein entsprechendes Vorprodukt aufnehmen kann. In dem gezeigten Beispiel hält die Transportvorrichtung einen Vorformling. Zum Halten dieses Vorformlings 2 weist die Transporteinrichtung 1 entsprechende Aufnahmeelemente 10 auf, die dazu geeignet sind, den Vorformling 2 zu greifen. Dies können beispielsweise passive Klammern sein.

Ausgehend von den Aufnahmeelementen 10 befindet sich radial innenliegend ein Träger 11 des Transportelements 4. In dem gezeigten Beispiel erstreckt dieser sich durch den inneren Teil 7 der Reinraumbegrenzung und ist mit der Antriebseinheit bzw. einem Hauptträger 12 verbunden. Die Aussparung (Durchtrittsöffnung) 13, durch welche der Träger 11 durch den inneren Teil 7 der Reinraumbegrenzung hindurchtritt, ist mittels einer geeigneten Dichtung 14 derart verschlossen, dass Kontaminationen des Reinrauminneren 3 verhindert werden. Dabei ist jede Art der Dichtung 14 möglich, die die Sterilität des Reinrauminneren 3 langfristig gewährt. Eine Möglichkeit ist beispielsweise eine verschließende Schweißnaht.

Eine weitere Möglichkeit des sicheren Verhinderns von Kontaminationen über eine Öffnung im inneren Teil der Reinraumbegrenzung 7 zum Hindurchführen des Trägers 11 des Transportelements 4 ist es, den Träger 11 mehrteilig auszubilden. Dabei kann ein radial innenliegender Teil des Trägers 15 bis an die Außenseite 16 des inneren Teils der Reinraumbegrenzung 7 heranreichen und mit dieser fest verbunden werden. Ein zweiter, radial außenliegender Teil des Trägers 17 befindet sich im Inneren des Reinraums 3 und ist mit der Innenseite 18 des beweglichen Teils der Reinraumbegrenzung 7 verbunden. Dieser im Reinrauminneren 3 liegende Teil des Trägers 17 trägt das jeweilige Aufnahmeelement 10. Bei einer derartigen Anordnung wird einerseits ein Durchbruch in dem beweglichen Teils der Reinraumbegrenzung 7 vermieden, welcher einen potentiellen Kontaminationsweg darstellt. Zusätzlich ist es durch diese Ausführungsform auch möglich, die Position des im Reinrauminneren 3 liegenden Teils des Trägers 17 weitgehend beliebig zu variieren. Es ist nicht notwendig, dass der im Reinrauminneren 3 liegende Teil des Trägers 17 eine direkte Verlängerung des außerhalb des Reinraums 3 liegenden Teils des Trägers 15 darstellt. Es ist demnach möglich, den im Reinrauminneren 3 liegenden Teils des Trägers 17 an jeder beliebigen geeigneten Position an der inneren, beweglichen Reinraumbegrenzung 7 anzuordnen. Somit ist eine größere Variabilität und eine bessere Anpassung an bestimmte äußere Bedingungen (z.B. Bauhöhe des Reinraums 3, Größe des transportierbaren Kunststoffbehältnisses 2, Übergabehöhe, usw.) möglich.

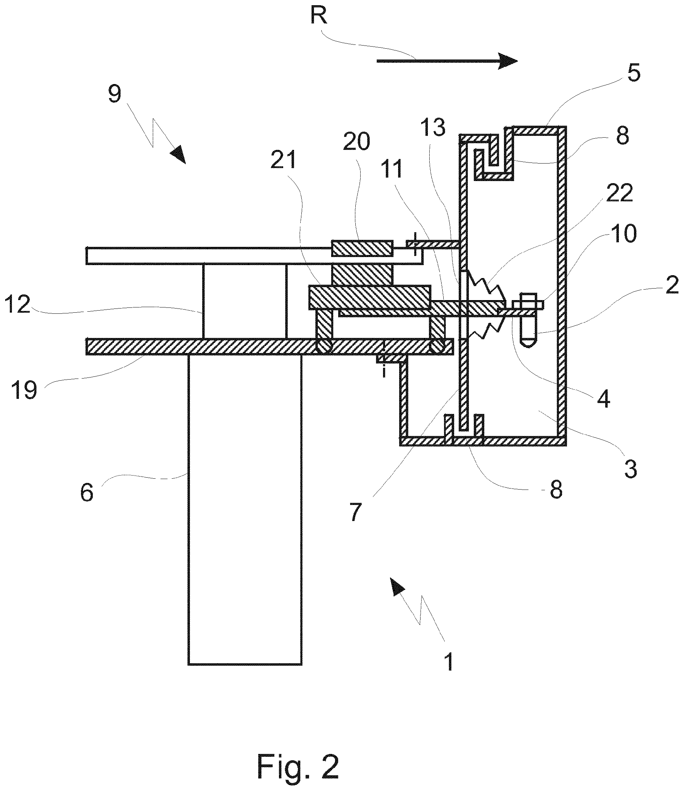

In Figur 2 ist eine schematische Darstellung einer Transporteinrichtung 1 zum Transportieren von Kunststoffbehältnissen 2 ähnlich Fig. 1 gezeigt, jedoch mit mechanischen Elementen zum Bewegen des Transportelementes 4. Wie auch das in Fig. 1 gezeigte Ausführungsbeispiel weist das in Fig. 2 gezeigte einen Reinraum 3 auf, welcher durch zwei gegenüber einander relativbewegliche Reinraumbegrenzungen 5, 7 gebildet wird. Die einzelnen Reinraumbegrenzungen 5, 7 sind wiederum mittels einer geeigneten Dichtung 8 (z.B. Wasserschloss 8) derart abgedichtet, so dass Kontaminationen des Reinrauminneren 3 vermieden werden. Der statische, radial außenliegende Teil 5 der Reinraumbegrenzung ist wie auch bei dem in Fig. 1 gezeigten Beispiel über ein Verbindungselement 19 mit dem ebenfalls feststehenden Gehäuse 6 des zentralen Antriebs verbunden. Ebenso ist auch der dazu relativbewegliche, radial innenliegende Teil 7 der Reinraumbegrenzung mit der Antriebseinheit 12 verbunden.

Im Gegensatz zu dem in Fig. 1 gezeigten Ausführungsbeispiel ist jedoch das im Inneren des Reinraums 3 befindliche Transportelement 4 relativbeweglich (insbesondere in der radialen Richtung R) zu dem radial innenliegenden Teil 7 der Reinraumbegrenzung ausgeführt. Auch dieses Transportelement 4 ist dazu geeignet, ein Kunststoffbehältnis 2 oder ein entsprechendes Vorprodukt (im gezeigten Beispiel einen Vorformling) aufzunehmen. Mittels einer Mechanik 20, 21 ist es jedoch möglich, das Transportelement 4 relativ zu dem radial innenliegenden Teil 7 der Reinraumbegrenzung zu bewegen. Diese Bewegungen können in alle Richtungen erfolgen. Denkbar sind beispielsweise Bewegungen in Transportrichtung, um den Abstand zwischen einzelnen transportierten Kunststoffbehältnissen 2 oder Vorprodukten variieren zu können.

Ebenso könnten radiale oder axiale Bewegungen notwendig sein, um beispielsweise die Übergabe an eine folgende Behandlungseinrichtung zu gewährleisten. Dazu kann es notwendig sein, dass das Kunststoffbehältnis 2 oder das Vorprodukt radial nach außen zu einem Übergabepunkt bewegt wird, oder die Höhe über dem Boden verändert wird, was axiale Bewegungen notwendig macht. Im gezeigten Ausführungsbeispiel sind zwei Antriebselemente 20, 21 gezeigt, wobei eines einen Antrieb 20 für Bewegungen des Transportelements 4 zur Anpassung des Abstandes zwischen einzelnen Kunststoffbehältnissen 2 oder Vorprodukten darstellt und ein anderes mechanisches Element 21 für die Durchführung von linearen Bewegungen in radialer Richtung geeignet ist. Bei diesen Elementen 20, 21 kann es sich beispielsweise um ein Schwenklager 20 und ein Linearlager 21 handeln.

Ebenso können die mechanischen Elemente dazu geeignet sein, die Aufnahmeelemente 10 der Transportvorrichtung zum Halten dieses Vorformlings zu bewegen. Somit ist es möglich, nicht nur passive Klammern zu verwenden, sondern auch Greifelemente, die aktiv das Kunststoffbehältnis 2 oder das Vorprodukt aufnehmen und dieses gesteuert wieder abgeben können.

Da die Mechanik durch den radial innenliegenden Teil 7 der Reinraumbegrenzung hindurchgeführt werden muss, bzw. der Träger 11 selbst gegenüber diesem Teil 7 der Reinraumbegrenzung beweglich ist, ist eine flexible Ausführung der Dichtung 14 notwendig. Eine Möglichkeit der Ausführung einer derartigen Dichtung kann mittels eines Faltenbalgs 22 realisiert werden. Diese Ausführungsform ist besonders bevorzugt und in Fig. 2 dargestellt. Ein Faltenbalg 22 ermöglicht den notwendigen Aktionsradius für den Träger 11 und gewährleistet gleichzeitig die Sterilhaltung des Reinrauminneren 3. Der Faltenbalg 22 besteht bevorzugt aus einem Material, welches aus einer Gruppe von Materialien ausgewählt ist, welche Kunststoffe, EPDM, Kautschuk, Elastomere, Gummi oder Stahl enthält. Der Faltenbalg 22 kann dabei als Membranbalg oder Wellbalg oder als Kombination hieraus ausgebildet sein.

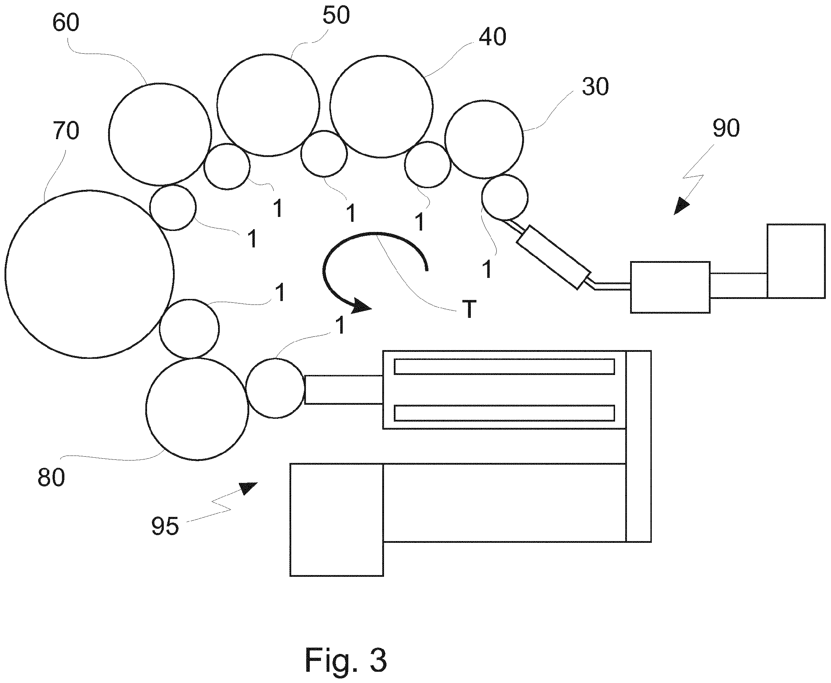

Fig. 3 zeigt eine schematische Darstellung einer Anlage zum Behandeln von Kunststoffbehältnissen 2, welche eine Vielzahl der oben beschriebenen Transporteinrichtungen 1 zum Transportieren von Kunststoffbehältnissen 2 umfasst. Dabei kennzeichnen die Bezugszeichen 30 - 80 Behandlungseinrichtungen, in denen die Kunststoffbehältnisse 2 oder die entsprechenden Vorformlinge bestimmten Behandlungen unterzogen werden. Diese Behandlungseinrichtungen sind jeweils mittels Transporteinrichtungen 1 verbunden, welche wie oben beschrieben ausgeführt sein können. Diese Transporteinrichtungen 1 sind dazu geeignet die Kunststoffbehältnisse 2 oder die entsprechenden Vorformlinge in der durch den Pfeil gekennzeichneten Transportrichtung T zu transportieren. Dabei können Transporteinrichtungen 1, welche sich stromaufwärts bezüglich der Sterilisationseinrichtung 30 und stromabwärts der Verschließeinrichtung 80 befinden, je nach Ausführungsform dieser Einrichtungen und Positionierung der Schleuse zwischen sterilem und unsterilem Bereich, auch unsteril ausgeführt sein. Bevorzugt umfassen jedoch insbesondere die Transporteinrichtungen 1, welche zwischen den Behandlungseinrichtungen 30 - 80 angeordnet sind wie oben beschrieben einen Reinraum. Somit ist es möglich, die Kunststoffbehältnisse 2 oder die entsprechenden Vorformlinge in der Sterilisationseinrichtung 30 zu sterilisieren und ab diesem Verfahrensschritt steril weiter zu befördern. In der stromabwärts der Sterilisationseinrichtung 30 folgenden Heizeinrichtung 40 werden die Vorformlinge erwärmt, um anschließend in der weiter stromabwärts folgenden Blaseinrichtung 50 auf das gewünschte Behältnisformat gebracht zu werden. Werden der Sterilisationseinrichtung 30 bereits fertig geformte Behältnisse zugeführt, sind diese Einrichtungen nicht zwangsläufig notwendig. Ebenso optional ist die weiter stromabwärts folgende zweite Sterilisationseinrichtung 60, welche vor dem folgenden Prozess des Abfüllens des Füllgutes das die Behältnisse 2 erneut sterilisiert und diese evtl. auf ein höheres Sterilisationsniveau bringt.

Dabei ist es möglich, dass ein Teilungsabstand der Behältnisse nach deren Umformung bzw. nach der Blaseinrichtung 50 nicht mehr geändert wird. Es wäre jedoch auch möglich, dass der Teilungsabstand vor der Abfüllung durch einen aseptischen Lufttransport oder eine Schnecke (nach dem Blasen) wieder eingestellt wird.

Die Formträger der Blaseinrichtung 50, welche die Kunststoffvorformlinge aufnehmen können dabei buchartig um eine vorgegebene Schwenkachse aufklappbar sein. Dabei kann auch eine Formhälfte feststehend (an einem Träger) angeordnet sein und die andere dieser gegenüber schwenken. Daneben wäre es auch möglich, dass eine Formhälfte über eine horizontale Schwenkachse (insbesondere nach vorne) aufgeklappt wird oder über eine senkrechte Schwenkachse seitlich weggeschwenkt wird. Besonders bevorzugt sind die erfindungsgemäßen Vorrichtungen 1 vor und/oder nach der Blaseinrichtung 50 angeordnet, um Kunststoffvorformlinge an die Blaseinrichtung 50 zu übergeben und/oder um umgeformte Behältnisse von der Blaseinrichtung 50 zu übernehmen.

Weiter stromabwärts befindet sich die Fülleinrichtung 70, welcher die Kunststoffbehältnisse 2 erneut mittels einer wie oben beschriebenen Transporteinrichtung 1 zugeführt werden. Nach dem Abfüllvorgang werden die noch unverschlossenen Behältnisse 2 ebenfalls mittels einer solchen Transporteinrichtung 1 von der Fülleinrichtung 70 an eine Verschließeinrichtung 80 übergeben. In dieser Verschließeinrichtung 80 erfolgt ebenfalls unter sterilen Bedingungen das Verschließen der Behältnisse 2, wodurch der abgefüllte Inhalt ebenfalls steril gehalten wird. Wie bereits oben erwähnt kann der anschließende Abtransport der befüllten und verschlossenen Kunststoffbehältnisse 2 von der Verschließeinrichtung 80 theoretisch mittels einer unsterilen Transporteinrichtung 1 erfolgen. Je nach Ausführungsform der Verschließeinrichtung 80 und dem Übergang zwischen sterilem und unsterilem Bereich kann jedoch auch eine sterile Transporteinrichtung 1 zum Abtransport der befüllten und verschlossenen Kunststoffbehältnisse 2 notwendig sein. Beispielsweise kann der Transport unter sterilen Bedingungen zu einer Schleuse erfolgen, welche den Übergang zwischen sterilem und unsterilem Bereich darstellt. Anschließend erfolgt die Übergabe an eine nicht näher beschriebene Abführeinrichtung 95 in welcher nachfolgende Behandlungsschritte wie beispielsweise die Etikettierung, Palettierung o.ä. unter unsterilen Bedingungen erfolgen können.

### Bezugszeichenliste

- 1: Transporteinrichtung
- 2: Kunststoffbehältnis
- 3: Reinraum
- 4: Transportelement
- 5: äußerer Teil der Reinraumbegrenzung
- 6: Gehäuse des zentralen Antriebs
- 7: innerer Teil der Reinraumbegrenzung
- 8: Dichtung / "Wasserschloss"
- 9: Umgebung / unsteriler Bereich
- 10: Aufnahmeelement
- 11: Träger des Transportelements
- 12: Antriebseinheit / Hauptträger
- 13: Aussparung / Durchtrittsstelle
- 14: Dichtung
- 15: radial innenliegender Teil des Trägers
- 16: Außenseite des inneren Teils der Reinraumbegrenzung
- 17: radial außenliegender Teil des Trägers
- 18: Innenseite des beweglichen Teils der Reinraumbegrenzung
- 19: Verbindungselement
- 20: erster Antrieb zur Bewegungen des Transportelements
- 21: zweiter Antrieb zur Bewegungen des Transportelements
- 22: Faltenbalg
- 30: erste Sterilisationseinrichtung
- 40: Heizeinrichtung / Ofen
- 50: Blaseinrichtung
- 60: zweite Sterilisationseinrichtung
- 70: Fülleinrichtung
- 80: Verschließeinrichtung
- 90: Zuführeinrichtung
- 95: Abführeinrichtung
- R: radiale Richtung
- T: Transportrichtung

## Patentansprüche

1. Transporteinrichtung (1) in einer Behälterbehandlungsmaschine, wobei die Transporteinrichtung (1) dazu eingerichtet ist Kunststoffbehältnisse (2) zu transportieren, wobei die Transporteinrichtung eine Vielzahl von Transportelementen (4) umfasst, welche jeweils an einem Träger (11) angeordnet sind und welche dazu geeignet sind, die Kunststoffbehältnisse (2) zu transportieren, wobei die Transporteinrichtung (1) einen Reinraum (3) mit mindestens zwei gegenüber einander relativbeweglichen Begrenzungen (5, 7) aufweist, innerhalb dessen die Transportelemente (4) zumindest abschnittsweise angeordnet sind,
**dadurch gekennzeichnet, dass**
mindestens ein Träger (11) eines Transportelements (4) durch eine Aussparung (13) in einer Begrenzung des Reinraums (3) hindurchtritt, und der Träger (11) und/oder das Transportelement (4) gegenüber der Aussparung (13) in der Begrenzung (7) mittels einer Dichtungseinrichtung (14, 22) abgedichtet ist.

2. Transporteinrichtung (1) nach Anspruch 1,
**dadurch gekennzeichnet, dass**
das Transportelement (4) gegenüber der Aussparung (13) in der Begrenzung (7) mittels einer Dichtungseinrichtung (14) abgedichtet ist, welche reinraumseitig angeordnet ist.

3. Transporteinrichtung (1) nach Anspruch 1 oder 2,
**dadurch gekennzeichnet, dass**
die Transporteinrichtung (1) einen Hauptträger (12) aufweist, an welchem die Träger (11) angeordnet sind und um welchen der Reinraum (3) ringförmig angeordnet ist.

4. Transporteinrichtung (1) nach Anspruch 3,
**dadurch gekennzeichnet, dass**
der die Grenze des Reinraums (3) passierende Träger (11) mittels mindestens eines Faltenbalges (22) gegenüber unsterilen Bereichen (9) abgeschirmt ist.

5. Transporteinrichtung (1) nach wenigstens einem der vorangegangenen Ansprüche,
**dadurch gekennzeichnet, dass**
der Träger (11) gegenüber der Begrenzung (7) relativbeweglich angeordnet ist.

6. Transporteinrichtung (1) nach wenigstens einem der vorangegangenen Ansprüche,
**dadurch gekennzeichnet, dass**
das Transportelement (4) mindestens ein aktives oder passives Aufnahmeelement (10) aufweist, welches dazu geeignet ist, mindestens ein Kunststoffbehältnis (2) aktiv oder passiv zumindest temporär zu fixieren.

7. Transporteinrichtung (1) nach Anspruch 6,
**dadurch gekennzeichnet, dass**
das aktive oder passive Aufnahmeelement (10) des Transportelements (4) innerhalb einer Sterilisationseinrichtung eine Transportklammer oder ein Transportdorn ist.

8. Anlage zum Umformen von Kunststoffbehältnissen (2), welche in Bezug auf eine Transportrichtung der Kunststoffbehältnissen (2) stromauf- und/oder stromabwärts von einer Umformungseinrichtung mindestens eine Transporteinrichtung (1) nach einem der vorangegangenen Ansprüche aufweist.

9. Verfahren zum Transportieren von Kunststoffbehältnissen (2) in einer Behälterbehandlungsmaschine mittels einer Transporteinrichtung (1) mit einer Vielzahl von Transportelementen (4), welche an einem Träger (11) angeordnet sind und welche die Kunststoffbehältnisse (2) transportieren, wobei die Transporteinrichtung (1) einen Reinraum (3) mit mindestens zwei gegenüber einander relativbeweglichen Begrenzungen (5, 7) aufweist, innerhalb dessen die Transportelemente (4) zumindest abschnittsweise angeordnet sind,
**dadurch gekennzeichnet, dass**
die Kunststoffbehältnisse (2) mittels mindestens einem Transportelement (4) transportiert werden, dessen Träger (11) durch eine Aussparung (13) in einer Begrenzung (7) des Reinraums (3) hindurchtritt und wobei der Träger (11) und/oder das Transportelement (4) gegenüber der Aussparung (13) in der Begrenzung (7) abgedichtet ist.

10. Verfahren nach Anspruch 9,
**dadurch gekennzeichnet, dass**
das Transportelement (4) gegenüber der Aussparung (13) mittels einer Dichtungseinrichtung (14, 22) reinraumseitig abgedichtet wird.

11. Verfahren nach wenigstens einem der Ansprüche 9 oder 10,
**dadurch gekennzeichnet, dass**
ein Abstand zwischen zwei transportierten Kunststoffvorformlingen oder Kunststoffbehältnissen (2) während des Transportes innerhalb des Reinraums (3) zumindest abschnittsweise reduziert wird, um bei gleichbleibender Anzahl von der Transporteinrichtung (1) aufgenommener und abgegebener Kunststoffvorformlingen oder Kunststoffbehältnissen (2) pro Zeiteinheit einen mehrmaligen Umlauf und somit längere Verweilzeiten der Kunststoffvorformlinge oder Kunststoffbehältnisse (2) in dieser Transporteinrichtung (1) zu ermöglichen.

## Claims

1. Transport device (1) in a container treatment machine, wherein the transport device (1) is designed for transporting plastics material containers (2), wherein the transport device comprises a plurality of transport elements (4) which are arranged in each case on a carrier (11) and which are suitable for transporting the plastics material containers (2), wherein the transport device (1) has a clean room (3) with at least two boundaries (5, 7) movable relative to one another, the transport elements (4) being arranged at least in some areas inside the clean room, **characterised in that**
at least one carrier (11) of a transport element (4) passes through an aperture (13) in a boundary of the clean room (3), and the carrier (11) and/or the transport element (4) is/are sealed off from the aperture (13) in the boundary (7) by means of a sealing device (14, 22).

2. Transport device (1) according to claim 1,
**characterised in that**
the transport element (4) is sealed off from the aperture (13) in the boundary (7) by means of a sealing device (14) which is arranged on the clean room side.

3. Transport device (1) according to claim 1 or 2,
**characterised in that**
the transport device (1) has a main carrier (12) on which the carriers (11) are arranged and around which the clean room (3) is arranged in an annular manner.

4. Transport device (1) according to claim 3,
**characterised in that**
the carrier (11) passing through the boundary of the clean room (3) is protected from non-sterile regions (9) by means of at least one folding bellows (22).

5. Transport device (1) according to at least one of the preceding claims,
**characterised in that**
the carrier (11) is arranged so as to be movable relative to the boundary (7).

6. Transport device (1) according to at least one of the preceding claims,
**characterised in that**
the transport element (4) has at least one active or passive receiving element (10) which is suitable for fixing at least one plastics material container (2) at least temporarily in an active or passive manner.

7. Transport device (1) according to claim 6,
**characterised in that**
the active or passive receiving element (10) of the transport element (4) inside a sterilisation device is a transport clamp or a transport mandrel.

8. Plant for reshaping plastics material containers (2), which has at least one transport device (1) according to any one of the preceding claims upstream and/or downstream of a reshaping device with respect to a transport direction of the plastics material containers (2).

9. Method of transporting plastics material containers (2) in a container treatment machine by means of a transport device (1) with a plurality of transport elements (4) which are arranged on a carrier (11) and which transport the plastics material containers (2), wherein the transport device (1) has a clean room (3) with at least two boundaries (5, 7) movable relative to each other, the transport elements (4) being arranged at least in some areas inside the clean room,
**characterised in that**
the plastics material containers (2) are transported by means of at least one transport element (4), the carrier (11) of which passes through an aperture (13) in a boundary (7) of the clean room (3), and wherein the carrier (11) and/or the transport element (4) is/are sealed off from the aperture (13) in the boundary (7).

10. Method according to claim 9,
**characterised in that**
the transport element (4) is sealed off from the aperture (13) by means of a sealing device (14, 22) on the clean room side.

11. Method according to at least one of claims 9 or 10,
**characterised in that**
a distance between two transported plastics material preforms or plastics material containers (2) is reduced at least in some areas during the transport inside the clean room (3), in order to permit a circulation multiple times and thus longer residence times of the plastics material preforms or plastics material containers (2) in this transport device (1) while the number of plastics material preforms or plastics material containers (2) received and delivered by the transport device (1) per unit of time remains constant.

## Revendications

1. Dispositif de transport (1) dans une machine de traitement de contenants, le dispositif de transport (1) étant configuré pour transporter des contenants en plastique (2), dans lequel le dispositif de transport comprend une pluralité d'éléments de transport (4) qui sont chacun disposés sur un support (11) et qui sont adaptés pour transporter les contenants en plastique (2), dans lequel le dispositif de transport (1) présente une salle blanche (3) avec au moins deux délimitations (5, 7) qui sont mobiles l'une par rapport à l'autre et à l'intérieur de laquelle les éléments de transport (4) sont disposés au moins en sections,
**caractérisé en ce que**
au moins un support (11) d'un élément de transport (4) traverse un évidement (13) dans une délimitation de la salle blanche (3), et le support (11) et/ou l'élément de transport (4) est scellé contre l'évidement (13) dans la délimitation (7) au moyen d'un dispositif d'étanchéité (14, 22).

2. Dispositif de transport (1) selon la revendication 1,
**caractérisé en ce que**
l'élément de transport (4) est scellé contre l'évidement (13) dans la délimitation (7) au moyen d'un dispositif d'étanchéité (14) qui est disposé du côté de la salle blanche.

3. Dispositif de transport (1) selon la revendication 1 ou 2,
**caractérisé en ce que**
le dispositif de transport (1) présente un support principal (12) sur lequel sont disposés les supports (11) et autour duquel la salle blanche (3) est disposée en forme d'anneau.

4. Dispositif de transport (1) selon la revendication 3,
**caractérisé en ce que**
le support (11) passant la délimitation de la salle blanche (3) est protégé des zones non stériles (9) au moyen d'au moins un soufflet (22).

5. Dispositif de transport (1) selon au moins l'une des revendications précédentes,
**caractérisé en ce que**
le support (11) est agencé de manière à être relativement mobile par rapport à la délimitation (7).

6. Dispositif de transport (1) selon au moins l'une des revendications précédentes,
**caractérisé en ce que**
l'élément de transport (4) présente au moins un élément récepteur (10) actif ou passif qui est apte à fixer activement ou passivement au moins un contenant en plastique (2) au moins temporairement.

7. Dispositif de transport (1) selon la revendication 6,
**caractérisé en ce que**
l'élément de réception (10) actif ou passif de l'élément de transport (4) à l'intérieur d'un dispositif de stérilisation est une pince de transport ou un mandrin de transport.

8. Installation pour le formage de contenants en plastique (2), qui comporte au moins un dispositif de transport (1) selon l'une des revendications précédentes en amont et/ou en aval d'un dispositif de formage par rapport à un sens de transport des contenants en plastique (2).

9. Procédé de transport de contenants en plastique (2) dans une machine de traitement de contenants au moyen d'un dispositif de transport (1) avec une pluralité d'éléments de transport (4) qui sont disposés sur un support (11) et qui transportent les contenants en plastique (2), dans lequel le dispositif de transport (1) présente une salle blanche (3) avec au moins deux délimitations (5, 7) qui sont mobiles l'une par rapport à l'autre et à l'intérieur de laquelle les éléments de transport (4) sont disposés au moins en sections,
**caractérisé en ce que**
les contenants en plastique (2) sont transportés au moyen d'au moins un élément de transport (4) dont le support (11) passe à travers un évidement (13) dans une délimitation (7) de la salle blanche (3) et dans lequel le support (11) et/ou l'élément de transport (4) est scellé contre l'évidement (13) dans la délimitation (7).

10. Procédé selon la revendication 9,
**caractérisé en ce que**
l'élément de transport (4) est scellé contre l'évidement (13) au moyen d'un dispositif d'étanchéité (14, 22) du côté de la salle blanche.

11. Procédé selon au moins l'une des revendications 9 ou 10,
**caractérisé en ce que**
une distance entre deux préformes en plastique ou contenants en plastique (2) transportés est réduite au moins par sections pendant le transport dans la salle blanche (3) afin de faire circuler plusieurs fois par unité de temps le même nombre de préformes ou récipients en plastique (2) reçus et fournis par le dispositif de transport (1) permettant ainsi des temps de séjour plus longs des préformes en plastique ou des contenants en plastique (2) dans ce dispositif de transport (1).
